# EUROPÄISCHE PATENTSCHRIFT

(11) **EP 3 022 054 B1**
(45) Veröffentlichungstag und Bekanntmachung des Hinweises auf die Patenterteilung: **01.07.2020**
(21) Anmeldenummer: 14702265.1
(22) Anmeldetag: 03.02.2014
(51) Int. Cl.: B32B 25/02, B32B 25/14, B32B 25/18, B32B 1/08, C08K 3/00, C08K 7/24, F16L 11/00

(54) **KAUTSCHUKMISCHUNG UND SCHLAUCH ENTHALTEND DIE KAUTSCHUKMISCHUNG**
RUBBER MIXTURE AND HOSE CONTAINING THE RUBBER MIXTURE
MÉLANGE DE CAOUTCHOUC ET FLEXIBLE LE CONTENANT

(30) Priorität: 15.04.2013 DE 102013103759
(43) Veröffentlichungstag der Anmeldung: 25.05.2016
(73) Patentinhaber: ContiTech MGW GmbH, 34346 Hannoversch-Münden (DE)
(72) Erfinder: SEIBOLD, Sebastian, 34346 Hann. Münden (DE); BORVITZ, Dieter, 30519 Hannover (DE)
(74) Vertreter: Preusser, Andrea
(86) Internationale Anmeldenummer: PCT/EP2014/051985
(87) Internationale Veröffentlichungsnummer: WO 2014/170038

(56) Entgegenhaltungen:
- WO-A1-2012/080158
- "Effect of mineral fillers in improving mechanical properties of FKM vulcanizates", INTERNET CITATION, 1. Februar 2013 (2013-02-01), Seiten 1-9, XP007922594, Gefunden im Internet: URL:http://www.thefreelibrary.com/Effect+o f+mineral+fillers+in+improving+mechanical+ properties+of+FKM...-a0323143390 [gefunden am 2014-03-20]
- THANH TU PHAM ET AL: "Fluoroelastomer-MWNT nanocomposites-1: Dispersion, morphology, physico-mechanical, and thermal properties", POLYMER COMPOSITES, Bd. 30, Nr. 2, 1. Februar 2009 (2009-02-01), Seiten 121-130, XP55109043, ISSN: 0272-8397, DOI: 10.1002/pc.20521
- ESSWEIN G: "FFD im Dialog ( Plasma Oberflächentechnik )", 20120101 , Nr. 3 1. Januar 2012 (2012-01-01), Seiten 1-20, XP007922593, Gefunden im Internet: URL:http://www.forschungsdienste.de/Portal s/0/Dokumente/FFD_Ausgabe_3_12_web.pdf [gefunden am 2014-02-21]

## Beschreibung

Die Erfindung betrifft eine Kautschukmischung und einen Schlauch, der wenigstens folgenden Schichtenaufbau aufweist:
- eine Innenschicht als Sperrschicht zu aggressiven Medien, die wenigstens einen Fluorkautschuk enthält und
- eine Außenschicht aus einer vernetzten Kautschukmischung.

Im einfachsten Fall ist der Schlauch ein Zwei-Lagen-Schlauch ohne eingebettete Festigkeitsträgerschicht, gebildet also ausschließlich aus einer Innenschicht und einer Außenschicht. In diesem Zusammenhang wird auf das Duplex-Extrusions-Verfahren verwiesen. Zumeist ist jedoch eine Festigkeitsträgerschicht, die ein- oder mehrlagig ausgebildet zwischen der Innenschicht und der Außenschicht angeordnet ist, vorhanden. Neben dem zweilagigen Grundaufbau und der Festigkeitsträgerschicht können noch weitere Schichten vorhanden sein.

Für die Innenschicht mit Sperrschichtfunktion gegenüber dem zu transportierenden Medium wird wegen seiner Medienbeständigkeit sowie hohen Temperaturbeständigkeit insbesondere eine Fluorkautschukmischung eingesetzt. Diese so genannten FKM-Mischungen, auch als FPM-Mischungen bezeichnet, können mit Polyolen und quarternären Ammoniumsalzen, wie bspw. in DE 43 11 549 A1 oder auch in EP 1 096 190 B1 beschrieben, oder bisphenolisch und / oder peroxidisch, wie bspw. in EP 1 396 670 B1 beschrieben, vernetzt sein.

Wichtig bei der Verwendung von Fluorkautschukmischungen, besonders bei dem Einsatz als Innenschicht in Schläuchen, ist ein guter Weiterreißwiderstand der Kautschukmischung.

Die Innenschicht soll als Sperrschicht gegen aggressive Medien, wie bspw. Säuren oder Kraftstoffe, wirken, so dass hierbei der Reißbeständigkeit, insbesondere dem Weiterreißwiderstand, eine große Bedeutung zukommt.

Eine übliche Methode zur Erhöhung des Weiterreißwiderstands ist die gezielte Untervernetzung der Mischung. Dabei werden bei bisphenolisch vernetzen Mischungen der Gehalt an Bisphenol und bei peroxidisch vernetzen Mischungen der Gehalt des organischen Peroxids und / oder der Gehalt an Co-Vernetzer, wie bspw. TAIC, TAC oder TRIM, reduziert. Dies führt allerdings zu signifikant verminderten Zugfestigkeiten.

Aus DE 10 2011 055 316 A1 ist bereits bekannt, dass die Verwendung von aktiven Füllstoffen in Fluorkautschukmischungen zu einer Verbesserung des

Weiterreißwiderstandes führt. Durch die Zugabe von aktiven Füllstoffen, insbesondere aktiven Rußen, zu Fluorkautschukmischungen steigt allerdings die Viskosität und die Verarbeitung der Kautschukmischung wird dadurch schlechter.

WO 2012/080158 A1 offenbart Kautschukmischungen, die Kohlenstoffnanoröhren und aktive Füllstoffe enthalten.

Die Verbesserung der Verbesserung der Zugstärke durch den Einsatz von Kohlenstoffnanoröhren in Fluorokautschukzusammensetzungen wird von THANH TU PHAM et al. in "Fluoroelastomer-MWNT nanocomposites-1: Dispersion, morphology, physico-mechanical, and thermal properties",POLYMER COMPOSITES, Bd. 30, Nr. 2, Seiten 121-130 (DOI: 10.1002/pc.20521) beschrieben.

G. Esswein berichtet in "FFD im Dialog (Plasma Oberflächentechnik)",Nr. 3, Seiten 1-20 von der Verbesserung von elektrischer Leitfähigkeit und mechanischer Verstärkung durch den Einsatz von Kohlenstoffnanoröhren in Fluorokautschukzusammensetzungen im Vergleich zu den Verbesserungen durch aktive Füllstoffe.

Eine Aufgabe der vorliegenden Erfindung ist es daher, eine Kautschukmischung bereitzustellen, welche Fluorkautschuk enthält und sich durch einen verbesserten Weiterreißwiderstand und gleichzeitig durch eine verbesserte Verarbeitbarkeit auszeichnet. Gelöst wird diese Aufgabe dadurch, dass die Kautschukmischung, welche wenigstens einen Fluorkautschuk enthält, zusätzlich wenigstens einen aktiven Füllstoff, d.h. einen Füllstoff, der eine deutliche Wechselwirkung mit den eingesetzten Polymeren zeigt, und Kohlenstoffnanoröhren enthält.

Überraschenderweise wurde gefunden, dass sich der Weiterreißwiderstand von Fluorkautschukmischungen weiterhin optimieren lässt, wenn die Kautschukmischung neben aktiven Füllstoff zusätzlich Kohlenstoffnanoröhren enthält. Gleichzeitig steigt die Viskosität der Kautschukmischung durch Zugabe der Kohlenstoffnanoröhren nur geringfügig an. Dadurch kann der Anteil der aktiven Füllstoffe reduziert werden und somit die Viskosität herabgesetzt werden, was zu einer verbesserten Verarbeitbarkeit führt.

Die fachkundige Person unterscheidet zwischen aktiven Füllstoffen, die die Eigenschaften des Materials aufgrund von Wechselwirkungen mit dem oder den Polymeren, bedingt u.a. durch die reaktive Oberfläche dieser Füllstoffe z.B. durch polare Gruppen, beeinflussen und inaktiven Füllstoffen, die keine Einflüsse auf das Eigenschaftsbild der Kautschukmischung ausüben und praktisch nur zur Erhöhung des Volumens dienen.

Als aktive Füllstoffe im Rahmen dieser Erfindung können beispielsweise aktive Ruße, Magnesiumcarbonat, aktive gefällte Kieselsäure, pyrogene Kieselsäure, kondensierte Kieselsäure, Calcium- und Aluminiumsilikate, Fasern (Kurz- und Langfasern, Glas-, Kohle-, Aramidfasern), Whisker (Aluminiumoxid, Siliziumcarbid), Glimmer, Zinkoxid, Kern/Mantel-Füllstoffe und weitere sein.

Insbesondere die Verwendung von aktivem Ruß hat sich als vorteilhaft hinsichtlich der Reißeigenschaften gezeigt. Ob ein Ruß als aktiv oder inaktiv bezeichnet wird, hängt im Wesentlichen von seiner spezifischen Oberfläche ab. Als aktiv werden in der Regel alle Ruße bezeichnet, welche einen Iodzahl, gemäß ASTM D 1510, die auch als Iodabsorptionszahl bezeichnet wird, zwischen 60 und 300 g / kg und eine DBP-Zahl, zwischen 60 und 150 cm³ / 100g besitzen. Die DBP-Zahl gemäß ASTM D 2414 bestimmt das spezifische Absorptionsvolumen eines Rußes oder eines hellen Füllstoffes mittels Dibutylphthalat. Dies bedeutet, dass bevorzugt Ruße mit der Kennung N-1xx, N-2xx oder auch N-3xx als aktive Ruße bezeichnet und verwendet werden. Die Kennung der Ruße erfolgt gemäß der Klassifizierungstabelle der ASTM D 1765-06.
Besonders gute Eigenschaften erzielen Ruße der N-2xx und der N-1xx Serien.

Die in der Kautschukindustrie eingesetzten Kieselsäuren sind in der Regel gefällte Kieselsäuren, die insbesondere nach ihrer Oberfläche charakterisiert werden. Auch hier ist eine direkte Korrelation zwischen aktiver Kieselsäure und der Oberfläche vorhanden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.

Werden Kieselsäuren in der Kautschukmischung verwendet, so haben diese vorzugsweise eine Stickstoff-Oberfläche (BET) zwischen 50 und 400 m²/g und eine CTAB-Oberfläche zwischen 100 und 300 m²/g.

Die Gesamtmenge an aktiven Füllstoffen beträgt bevorzugt 2 bis 70 phr, besonders bevorzugt 5 bis 60 phr und ganz besonders bevorzugt 10 bis 50 phr.

Erfindungsrelevant ist es, dass die Fluorkautschukmischung Kohlenstoffnanoröhren enthält. Kohlenstoffnanoröhren sind der fachkundigen Person als CNT (carbonanotubes) bekannt und zählen nicht zu den aktiven Füllstoffen. Es wird im Wesentlichen zwischen einwandigen, SW-CNT (single wall CNT), doppelwandigen, DW-CNT (double wall CNT) und mehrwandigen, MW-CNT (multi wall CNT), unterschieden. Im Rahmen der vorliegenden Erfindung können alle Typen verwendet werden.
Da die gesundheitsgefährdenden Aspekte von Nanopartikeln, wie sie auch CNT darstellen, immer noch diskutiert werden, ist es zweckmäßig, wenn die CNT vor dem Einmischen in die Kautschukmischung als so genannter Masterbatch vorliegen. Masterbatch bedeutet, dass sich die CNT in einer Trägermatrix befinden. Als Trägermatrix kommen alle herkömmlich verwendeten Trägermatrizes in Frage. Besonders vorteilhaft ist es für die vorliegende Erfindung, wenn sich die CNT in einer Trägermatrix aus Fluorkautschuk befinden. Der Fluorkautschuk, der die Trägermatrix bildet kann hierbei in flüssiger oder fester Form vorliegen, d.h. es können alle Molekulargewichte des Fluorkautschuks verwendet werden. Als besonders praktikabel hat sich aber ein fester Fluorkautschuk als Trägermatrix erwiesen. Die Verwendung von Fluorkautschuk als Trägermatrix für die CNT führt in einer Fluorkautschukmischung zu keiner Erhöhung der Komplexität und zeigt keinen nennenswerten Einfluss auf die weiteren physikalischen Eigenschaften der Mischung.
Die Gesamtmenge an CNT beträgt bevorzugt 0,1 bis 10 phr, besonders bevorzugt 0,5 bis 5 phr und ganz besonders bevorzugt 1 bis 3 phr.
Der Einsatz von CNT hat den weiteren Vorteil, dass die Leitfähigkeit der Fluorkautschukmischung deutlich ansteigt, was für verschiedene Verwendungszwecke der Fluorkautschukmischung, wie z.B. die Verwendung in Ladeluftschläuchen oder in Öl- und Kraftstoffschläuchen, besonders vorteilhaft, wenn nicht sogar kunden- bzw. normenseitig gefordert ist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Bevorzugt ist es, wenn die Kautschukmischung keine oder nur geringe Mengen an weiteren inaktiven Füllstoffen enthält, d.h. die Gesamtmenge an inaktiven Füllstoffen zwischen 0 und 20 phr, bevorzugt zwischen 0 und 10 phr, ganz besonders bevorzugt zwischen 0 und 5 phr, beträgt. Besonders bevorzugt ist es, wenn die Kautschukmischung frei von inaktiven Füllstoffen ist, d.h. die Gesamtmenge 0 phr beträgt. In die Gesamtmenge an inaktiven Füllstoffen wird hierbei die Menge an CNT nicht dazugerechnet. Zu den inaktiven Füllstoffen zählen insbesondere Kreide, Kieselgur, Tonerde-Gel, Asphalt, Hartgummistaub, anorganische und organische Pigmente Glaskugeln, Kalkstein (CaCO₃), Kieselsäure (inaktiv), Ruß (inaktiv), Holzmehl, Nussschalenmehl, Kaolin, Feldspat und Talkum.

Als zweckmäßig für die Lösung der gestellten Aufgabe hat sich auch das Vorhandensein von wenigstens einem Harz gezeigt. Harze sind seit langem bekannte Zuschlags stoffe für Kautschukmischungen. Sie dienen vor allem als Verarbeitungshilfsmittel und bewirken die nötige Grünklebrigkeit der Kautschukmischungen. Ferner lassen sich durch die Harze bestimmte Vulkanisateigenschaften, wie Härte, Modul- und Quellverhalten beeinflussen. Überraschenderweise zeigt die Verwendung wenigstens eines Harzes eine zusätzliche Verbesserung der Bruchdehnungseigenschaften der Kautschukmischung. Typische in der Kautschukindustrie eingesetzte Harze sind z.B. Kohlenwasserstoffharze, wie bspw. Petroleumharze, Terpenharze und Kohlenteerharze, oder natürliche Harze, wie bspw. Kolophonium und Tallharz, oder Epoxidharze, Melaminharze, Polyesterharze, Polyurethanharze, Acrylharze, Fluorharze oder Vinylesterharze, Ketonharze, Phenolharze. Insbesondere Kohlenteerharze, wie beispielsweise Cumaron-Inden-Harze, zeigen einen positiven Einfluss auf die Bruchdehnungseigenschaften.

Als Fluorkautschuk können alle der fachkundigen Person bekannten Fluorkautschuke verwendet werden. Ebenso können die Copolymere, wie bespw. Poly(vinylidenfluorid-co-hexafluorpropylen) (VDF/HFP), Poly(vinylidenfluorid-co-hexafluorpropylen-co-tetrafluorethylen) (TFB), Poly(vinylidenfluorid-co-tetrafluorethylen-co-perfluormethylvinylether) (VDF/TFE/PMVE), Poly(tetrafluorethylen-co-propylen) (TFE/P) und Poly(vinylidenfluorid-co-chlortrifluorethylen) (VDF/CTFE) verwendet werden. Der in der Fluorkautschukmischung eingesetzte Fluorkautschuk ist vorzugsweise ein Co-Polymer oder Ter-Polymer, wobei der Fluoranteil 50 bis 70 % beträgt.

Der Fluorkautschuk kann einzeln oder im Verschnitt mit wenigstens einem weiteren Fluorkautschuk, wie bspw. Fluorsilikon, Polytetrafluorethylen (PTFE) oder Perfluorethylenpropylen (FEP), eingesetzt werden.
Die Gesamtmenge an Fluorkautschuk beträgt zweckmäßigerweise 50 bis 100 phr, bevorzugt 70 bis 100 phr, besonders bevorzugt 90 bis 100 phr.
Weniger als 50 phr bedeutet zumeist eine Reduzierung der Wärmebeständigkeit, was für die meisten Anwendungen, insbesondere für Schläuche im Automobilbereich, dann nicht mehr den Anforderungen entsprechen würde.

Die Kautschukmischung kann aber wenigstens einen weiteren Kautschuk enthalten. Hier haben sich insbesondere zur Anwendung im Bereich der Schläuche Nitrilkautschuk, hydrierter Nitrilkautschuk, hydrierter Acrylnitrilbutadienkautschuk, Chloroprenkautschuk, Butylkautschuk, Halobutylkautschuk, oder Ethylen-Propylen-Dien-Kautschuk als geeignet gezeigt.

Die Kautschukmischung enthält noch weitere Zusatzstoffe, wie das Vernetzungssystem, umfassend ein Vernetzungsmittel und einen Beschleuniger. Je nach der Art der Kautschukmischung, die bei einem mehrschichtigen Schlauch verschiedenartig sein kann, umfassen die Mischungsingredienzien noch ein Verarbeitungshilfsmittel und/oder einen Weichmacher und/oder ein Alterungsschutzmittel sowie gegebenenfalls weitere Zusatzstoffe, beispielsweise Fasern und Farbpigmente. Verarbeitungshilfsmittel können insbesondere Carnaubawachse, Pentaerythrityltetrastearate, Seifen, Fettsäureester, Phosphorsäureester, Borsäureester, Säureamide, aliphatische und olefinische Wachse und aliphatische und olefinische Amine oder deren Gemische sein. Durch eine zielgerichtete Verwendung dieser Verarbeitungshilfsmittel wird die Verarbeitbarkeit durch Viskositätserniedrigung gewährleistet.
Die Vernetzung kann bisphenolisch, peroxidisch oder auch bisaminisch erfolgen. Auch Mischformen dieser Vernetzungsarten sind möglich.

Eine weitere Aufgabe der Erfindung besteht darin, einen Schlauch bereitzustellen, dessen Innenschicht sich durch einen optimierten Weiterreißwiderstand bei gleichzeitig verbesserter Verarbeitbarkeit auszeichnet.

Gelöst wird diese Aufgabe dadurch, dass der Schlauch eine Innenschicht als Sperrschicht zu aggressiven Medium besitzt, die aus einer Kautschukmischung enthaltend wenigstens einen Fluorkautschuk und wenigstens einen aktiven Füllstoff und Kohlenstoffnanoröhren aufgebaut ist. Des Weiteren besitzt der Schlauch eine Außenschicht aus einer vernetzten Kautschukmischung.

Bezüglich der Zusammensetzung der Kautschukmischung, vor allem hinsichtlich des Fluorkautschuks, der aktiven Füllstoffe, der CNT und weiteren Bestandteile, gelten die bereits weiter oben erfolgten Ausführungen zu der erfindungsgemäßen Kautschukmischung.

Der erfindungsgemäße Schlauch kann extrudiert oder gewickelt sein und besteht im einfachsten Fall aus zwei Lagen, nämlich einer Außenschicht und einer Innenschicht.
Es ist aber auch möglich, dass noch zusätzliche Schichten vorhanden sind. Dies können Zwischenschichten und / oder Festigkeitsträgerschichten sein.
Auch ein Drei-Lagen-Schlauch, bestehend aus einer Innenschicht, Festigkeitsträgerschicht und Außenschicht, wird häufig eingesetzt.

Bezüglich der Außenschicht und der weiteren möglichen Schichten werden nun bevorzugte Varianten dargestellt, wobei folgende Abkürzungen gelten:
FKM (Fluorkautschuk), ACM (Acrylat-Kautschuk), AEM (Ethylen-Acrylat-Kautschuk),
EPM (Ethylen-Propylen-Kautschuk (Mischpolymerisat)), EPDM (Ethylen-Propylen-Dien-Kautschuk (Mischpolymerisat)), VMQ (Silikonkautschuk).

### Außenschicht

Die Kautschukkomponente der Kautschukmischung ist vorzugsweise FKM, ACM, AEM, EPM, EPDM oder VMQ oder ein Verschnitt der vorgenannten Kautschukkomponenten mit wenigstens einer weiteren Kautschukkomponente, beispielsweise ein AEM/EPDM-Verschnitt. Zumeist werden jedoch verschnittfreie Kautschukmischungen eingesetzt.
Da an die Außenschicht andere Anforderungen gestellt werden als an die Innenschicht, muss hier nicht die Fluorkautschukmischung der Innenschicht verwendet werden. Häufig genügen hier die FKM-Standardmischungen nach dem Stand der Technik. Hat auch die Außenschicht Kontakt zu einem sauren Medium oder ist diese extrem thermisch oder dynamisch belastet, so bietet sich dann jedoch die gleiche Lösung an wie für die Innenschicht.
Kautschukmischungen auf der Basis von ACM und oder AEM werden insbesondere diaminisch vernetzt.
Kautschukmischungen auf der Basis von EPM, EPDM sowie VMQ werden wiederum bevorzugt peroxidisch vernetzt.

### Festigkeitsträgerschicht

Die Festigkeitsträgerschicht ist aus einem Gewebe, Gewirke oder Gestrick gebildet, insbesondere auf der Basis eines textilen Werkstoffes. Die diesbezüglichen Werkstoffe können Polyamid (PA), Polyimid (PI), Aramid, insbesondere para-Aramid oder meta-Aramid, Polyvinylacetal (PVA), Polyetheretherketon (PEEK), Polyester, insbesondere Polyethylentherephthalat (PET) oder Polyethylen-2,6-naphthalat (PEN), Polysulfon (PSU), Polyoxadiazol (POD), Polyphenylen oder Polyphenylenderivat, insbesondere Polyphenylensulfid (PPS), oder Glasfasern sein. Auch Hybridkonzepte, d.h. Mischformen der genannten, können zum Einsatz gelangen, beispielsweise beispielsweise in Form eines Mischzwirns aus m- und p-Aramid oder aus PPS und PA. Das PPS als Hochleistungswerkstoff trägt zu einer hohen Festigkeit bei, während das PA neben dem Festigkeitsträgerbeitrag auch über seine Haftaktivierbarkeit zu einer verbesserten Haftung gegenüber dem umgebenden elastomeren Werkstoff beiträgt.

### Zwischenschicht

Die Zwischenschicht hat auch die Bedeutung einer Haftschicht zwischen der Innenschicht und der Festigkeitsträgerschicht. Die Kautschukkomponente der Kautschukmischung ist vorzugsweise ACM oder AEM oder ein Verschnitt der vorgenannten Kautschukkomponenten mit wenigstens einer weiteren Kautschukkomponente, beispielsweise wiederum ein AEM/EPDM-Verschnitt. Zumeist werden jedoch verschnittfreie Kautschukmischungen eingesetzt, wobei diaminisch vernetztes AEM von besonderer Bedeutung ist.

Eingesetzt wird der erfindungsgemäße Schlauch insbesondere für luftführende Schläuche, wie beispielsweise Ladeluftschläuche, Rußpartikelfilterschläuche, Dieselpartikelfilterschläuche, Steuerschläuche, aber auch für Kraftstoffschläuche oder Ölschläuche, wie bspw. Turboladerkühlungsschläuche.

Die Erfindung soll nun anhand von Vergleichs- und Ausführungsbeispielen, die in der Tabelle 1 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.
Im jeweils oberen Teil der Tabellen ist dabei die Mischungszusammensetzung dargestellt, während jeweils im unteren Teil der Tabellen die dazugehörigen entsprechenden physikalischen Eigenschaften illustriert sind.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

**Tabelle 1a**

| **Bestandteile** | **Einheit** | **V1** | **V2** | **V3** | **V4** | **E1** | **E2** |
|---|---|---|---|---|---|---|---|
| FKM^{a} | phr | 100 | 100 | 100 | 100 | 91,5 | 86,5 |
| Ruß, N 220 | phr | 20 | -- | -- | 15 | 5 | 5 |
| Ruß, N 772 | phr | -- | 20 | -- | -- | -- | -- |
| Ruß, N 990 | phr | -- | -- | 20 | -- | -- | -- |
| Kieselsäure, VN3 | phr | -- | -- | -- | 8 | 8 | 8 |
| Verarbeitungshilfe 1 | phr | 1 | 1 | 1 | 1 | 1 | 1 |
| Verarbeitungshilfe 2 | phr | 2 | 2 | 2 | 0 | 0 | 0 |
| Cumaron-Inden-Harz | phr | 0,75 | 0,75 | 0,75 | 0 | 0 | 0 |
| TAIC 70% | phr | 3,5 | 3,5 | 3,5 | 3,5 | 3,5 | 3,5 |
| Organ. Peroxide 45% | phr | 1,8 | 1,8 | 1,8 | 1,8 | 1,8 | 1,8 |
| CNT^{b} | | -- | -- | -- | -- | 10 | -- |
| CNT^{c} | | -- | -- | -- | -- | -- | 15 |

| | | | | | | | |
|---|---|---|---|---|---|---|---|
| ^{a}peroxidisches Co-Polymer, 66 Gew. -% Fluor ^{b} 15 Gew. -% MW-CNT in FKM ^{c} 10 Gew. -% MW-CNT in FKM | | | | | | | |

**Tabelle 1b**

| **Bestandteile** | **Einheit** | **V1** | **V2** | **V3** | **V4** | **E1** | **E2** |
|---|---|---|---|---|---|---|---|
| Dichte DIN EN ISO 1183-1 | g/cm³ | 1,78 | 1,79 | 1,78 | 1,8 | 1,8 | 1,8 |
| Mooney- Viskosität ML1+4, ASTM D1646 | Mooney | 135 | 85 | 70 | 110 | 114 | 113 |
| Härte DIN 53505 | Shore A | 76 | 71 | 67 | 77 | 81 | 84 |
| Zugfestigkeit DIN 53504 S3A | N/mm² | 22,8 | 17,6 | 13,0 | 23,8 | 24,2 | 21,9 |
| Bruchdehnung DIN 53504 S3A | % | 673 | 571 | 575 | 456 | 517 | 493 |
| Weiterreißwiderstand DIN ISO 34-1A | N/mm | 13,6 | 7,3 | 6,1 | 9,2 | 13,9 | 10,1 |

Aus der Tabelle 1b ist zu erkennen, dass durch die Verwendung von aktiven Füllstoffen, insbesondere aktiven Rußen, in Kombination mit CNT sich der Weiterreißwiderstand weiter verbessern lässt. Gleichzeitig ist ersichtlich, dass die Materialeigenschaften von E1 und E2 im Vergleich zu V4 besser sind. Dadurch ließe sich die Menge an Ruß weiter reduzieren und gleichzeitig die Eigenschaften von V4 erhalten. Die Viskosität würde sich dann dadurch weiter verringern, wie im Vergleich aus V1 zu V4 deutlich wird, und somit die Verarbeitbarkeit weiter verbessern.

Der Erfindung wird nun anhand eines Ausführungsbeispiels unter Bezugnahme auf eine schematische Zeichnung weiter erläutert.

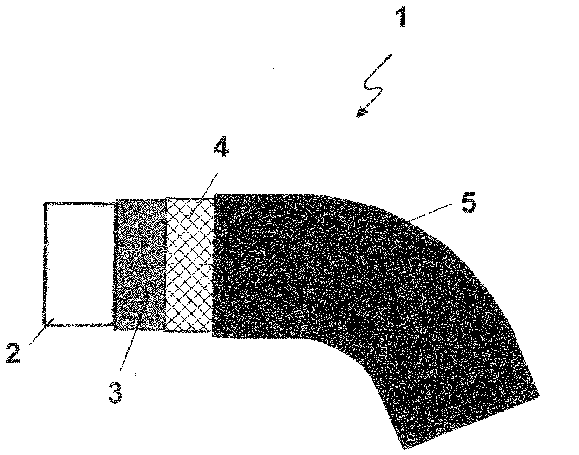

Die einzige Figur zeigt einen Schlauch 1, der als Krümmerschlauch ausgebildet ist. Der Schlauch weist dabei folgenden Schichtenaufbau mit folgender beispielhafter Werkstoffkonzeption auf:

| | |
|---|---|
| Innenschicht 2: | peroxidisch vernetzte Fluorkautschukmischung, die wenigstens einen Fluorkautschuk und wenigstens einen aktiven Füllstoff und CNT enthält |
| Zwischenschicht 3: | diaminisch vernetzte und verschnittfreie VMQ-Kautschukmischung |
| Festigkeitsträgerschicht 4: | Textilfäden aus Aramid |
| Außenschicht 5: | diaminisch vernetzte und verschnittfreie VMQ-Kautschukmischung |

### Bezugszeichenliste

### (Teil der Beschreibung)

- 1: Schlauch
- 2: Innenschicht (Sperrschicht)
- 3: Zwischenschicht
- 4: Festigkeitsträgerschicht
- 5: Außenschicht

## Patentansprüche

1. Kautschukmischung, **dadurch gekennzeichnet, dass** sie wenigstens einen Fluorkautschuk und wenigstens einen aktiven Füllstoff und Kohlenstoffnanoröhren enthält.

2. Kautschukmischung nach Anspruch 1, **dadurch gekennzeichnet, dass** sie 50 bis 100 phr eines Fluorkautschuks oder 50 bis 100 phr eines Verschnitts aus zwei oder mehreren Fluorkautschuken enthält.

3. Kautschukmischung nach Anspruch 1 oder 2, **dadurch gekennzeichnet, dass** sie 2 bis 70 phr wenigstens eines aktiven Füllstoffs enthält.

4. Kautschukmischung nach einem der Ansprüche 1 bis 3, **dadurch gekennzeichnet, dass** der aktive Füllstoff aktiver Ruß ist.

5. Kautschukmischung nach Anspruch 4, **dadurch gekennzeichnet, dass** der aktive Ruß eine Iodzahl gemäß ASTM D 1510 zwischen 60 und 300 g / kg und eine DBP-Zahl gemäß ASTM D 2414 zwischen 60 und 150 cm³ / 100g besitzt.

6. Kautschukmischung nach einem der Ansprüche 1 bis 5, **dadurch gekennzeichnet, dass** sie 0,1 bis 10 phr Kohlenstoffnanoröhren enthält.

7. Kautschukmischung nach einem der Ansprüche 1 bis 6, **dadurch gekennzeichnet, dass** sie zusätzlich 0 bis 20 phr inaktive Füllstoffe enthält.

8. Schlauch (1) **gekennzeichnet durch** wenigstens folgenden Schichtenaufbau:
- eine Innenschicht (2) als Sperrschicht zu aggressiven Medien, die wenigstens einen Fluorkautschuk und wenigstens einen aktiven Füllstoff und Kohlenstoffnanoröhren enthält und
- eine Außenschicht (5) aus einer vernetzten Kautschukmischung.

9. Schlauch (1) nach Anspruch 8, **dadurch gekennzeichnet, dass** dieser frei von einer Festigkeitsträgerschicht ausschließlich aus einer Innenschicht und Außenschicht besteht.

10. Schlauch (1) nach Anspruch 8, **dadurch gekennzeichnet, dass** zwischen der Innenschicht (2) und der Außenschicht (5) eine Festigkeitsträgerschicht (4) angeordnet ist, die ein- oder mehrlagig ausgebildet ist.

11. Schlauch (1) nach einem der Ansprüche 8 bis 10, **dadurch gekennzeichnet, dass** die Innenschicht (2) 50 bis 100 phr eines Fluorkautschuks oder 50 bis 100 phr eines Verschnitts aus zwei oder mehreren Fluorkautschuken enthält.

12. Schlauch (1) nach einem der Ansprüche 8 bis 12, **dadurch gekennzeichnet, dass** die Innenschicht (2) 2 bis 70 phr wenigstens eines aktiven Füllstoffs enthält.

13. Schlauch nach einem der Ansprüche 8 bis 12, **dadurch gekennzeichnet, dass** der aktive Füllstoff der Innenschicht (2) ein aktiver Ruß ist.

14. Schlauch (1) nach einem der Ansprüche 8 bis 13, **dadurch gekennzeichnet, dass** die Innenschicht (2) 0,1 bis 10 phr Kohlenstoffnanoröhren enthält.

## Claims

1. Rubber mixture, **characterized in that** it comprises at least one fluororubber and at least one active filler and carbon nanotubes.

2. Rubber mixture according to Claim 1, **characterized in that** it comprises 50 to 100 phr of a fluororubber or 50 to 100 phr of a blend of two or more fluororubbers.

3. Rubber mixture according to Claim 1 or 2, **characterized in that** it comprises 2 to 70 phr of at least one active filler.

4. Rubber mixture according to any of Claims 1 to 3, **characterized in that** the active filler is active carbon black.

5. Rubber mixture according to Claim 4, **characterized in that** the iodine number of the active carbon black in accordance with ASTM D1510 is between 60 and 300 g/kg and its DBP number in accordance with ASTM D2414 is between 60 and 150 cm³/100 g.

6. Rubber mixture according to any of Claims 1 to 5, **characterized in that** it comprises 0.1 to 10 phr of carbon nanotubes.

7. Rubber mixture according to any of Claims 1 to 6, **characterized in that** it additionally comprises 0 to 20 phr of inert fillers.

8. Hose (1) **characterized by** at least the following layer structure:
- as barrier layer with respect to aggressive fluids, an internal layer (2) which comprises at least one fluororubber and at least one active filler and carbon nanotubes, and
- an external layer (5) made of a crosslinked rubber mixture.

9. Hose (1) according to Claim 8, **characterized in that** this, being free from any reinforcement layer, consists exclusively of an internal layer and external layer.

10. Hose (1) according to Claim 8, **characterized in that** arranged between the internal layer (2) and the external layer (5) there is a single- or multipleply reinforcement layer (4).

11. Hose (1) according to any of Claims 8 to 10, **characterized in that** the internal layer (2) comprises 50 to 100 phr of a fluororubber or 50 to 100 phr of a blend of two or more fluororubbers.

12. Hose (1) according to any of Claims 8 to 10, **characterized in that** the internal layer (2) comprises 2 to 70 phr of at least one active filler.

13. Hose according to any of Claims 8 to 12, **characterized in that** the active filler of the internal layer (2) is an active carbon black.

14. Hose (1) according to any of Claims 8 to 13, **characterized in that** the internal layer (2) comprises 0.1 to 10 phr of carbon nanotubes.

## Revendications

1. Mélange de caoutchouc, **caractérisé en ce qu'**il contient au moins un caoutchouc fluoré et au moins une charge active et des nanotubes de carbone.

2. Mélange de caoutchouc selon la revendication 1, **caractérisé en ce qu'**il contient 50 à 100 pce d'un caoutchouc fluoré ou 50 à 100 pce d'un mélange de deux ou davantage de caoutchoucs fluorés.

3. Mélange de caoutchouc selon la revendication 1 ou 2, **caractérisé en ce qu'**il contient 2 à 70 pce d'au moins une charge active.

4. Mélange de caoutchouc selon l'une quelconque des revendications 1 à 3, **caractérisé en ce que** la charge active est un noir de carbone actif.

5. Mélange de caoutchouc selon la revendication 4, **caractérisé en ce que** le noir de carbone actif présente un indice d'iode selon ASTM D 1510 compris entre 60 et 300 g/kg et un indice DBP selon ASTM D 2414 compris entre 60 et 150 cm³/100 g.

6. Mélange de caoutchouc selon l'une quelconque des revendications 1 à 5, **caractérisé en ce qu'**il contient 0,1 à 10 pce de nanotubes de carbone.

7. Mélange de caoutchouc selon l'une quelconque des revendications 1 à 6, **caractérisé en ce qu'**il contient en outre 0 à 20 pce de charges inactives.

8. Tuyau (1), **caractérisé par** au moins la structure de couches suivante :
- une couche intérieure (2) en tant que couche de barrière contre les milieux agressifs, qui contient au moins un caoutchouc fluoré et au moins une charge active et des nanotubes de carbone, et
- une couche extérieure (5) en un mélange de caoutchouc réticulé.

9. Tuyau (1) selon la revendication 8, **caractérisé en ce que** celui-ci, exempt d'une couche de renfort, est constitué exclusivement par une couche intérieure et une couche extérieure.

10. Tuyau (1) selon la revendication 8, **caractérisé en ce qu'**une couche de renfort (4), qui est configurée sous forme mono- ou multicouche, est agencée entre la couche intérieure (2) et la couche extérieure (5).

11. Tuyau (1) selon l'une quelconque des revendications 8 à 10, **caractérisé en ce que** la couche intérieure (2) contient 50 à 100 pce d'un caoutchouc fluoré ou 50 à 100 pce d'un mélange de deux ou davantage de caoutchoucs fluorés.

12. Tuyau (1) selon l'une quelconque des revendications 8 à 12, **caractérisé en ce que** la couche intérieure (2) contient 2 à 70 pce d'au moins une charge active.

13. Tuyau selon l'une quelconque des revendications 8 à 12, **caractérisé en ce que** la charge active de la couche intérieure (2) est un noir de carbone actif.

14. Tuyau (1) selon l'une quelconque des revendications 8 à 13, **caractérisé en ce que** la couche intérieure (2) contient 0,1 à 10 pce de nanotubes de carbone.
